# EUROPEAN PATENT APPLICATION

(11) **EP 4 647 928 A1**
(43) Date of publication of application: **12.11.2025**
(21) Application number: 25168909.7
(22) Date of filing: 07.04.2025
(51) Int. Cl.: G06F 16/21, G06F 16/23

(54) **CONFIGURABLE UPDATE RULES FOR COMPOSITE DATA PRODUCTS**

(30) Priority: 03.05.2024 GB 202406265
(71) Applicant: DataOps Software Limited, London NW1 7HU (GB)
(72) Inventor: ADAMS,, Guy, London, NW1 7HU (GB); BRADFORD,, Colin, London, NW1 7HU (GB); GETOV,, Martin, London, NW1 7HU (GB); CRUMLEY,, Luke, London, NW1 7HU (GB)
(74) Representative: Carpmaels & Ransford LLP

(57) **Abstract**

This disclosure relates to methods, devices, and computer-readable media relating to update rules for composite data products (i.e., data products which depend on one or more upstream data products). One such method comprises receiving a data product definition for the downstream data product, wherein the data product definition identifies one or more upstream data products on which the downstream data product depends, receiving data indicating the latest build for each upstream data product, determining, based on the received data and one or more user-defined update rules for the downstream data product, whether an update condition is satisfied, and in accordance with a determination that the update condition is satisfied, triggering a build of the downstream data product.

## Description

### Field of Invention

The present invention relates to methods, devices, and computer-readable media relating to update rules for data products which depend on one or more upstream data products (e.g., "composite" data products). In particular, the present invention relates to improvements which involve the definition of custom data product update rules by a user.

### Background

In recent years, interest has emerged in the field of data engineering regarding the concept of "Data as a Product" (DaaP). Under the DaaP approach, product-management methodologies are applied to datasets and to the digital assets that extract, transform, load, curate and manipulate them, with the aim of providing data consumers with data that is, inter alia, discoverable (it should be straightforward for target users to find, access and understand), trustworthy (it should provide commitments to data consumers such as completeness, accuracy, timeliness, etc.), and self-contained (other data should not be requisite to provide value from the data).

A "data product" is a concrete implementation of the DaaP paradigm as a real-world digital asset, and (as explained in more detail hereinbelow) may comprise any number of tables, views and/or materialised views, which are derived from one or more sources of data, for the purpose of being accessed by one or more data consumers. Some data products may be "composite" data products, in the sense that they use one or more other data products as their source(s) of data, processing and outputting these other products' data.

It is generally advantageous for a data product to use data which is as "fresh" (i.e., up-to-date, recent) and as accurate as possible. For a simple standalone data product, ensuring sufficient freshness can be as straightforward as scheduling a build of the data product to run with a particular predefined frequency, this frequency being selected by a user or developer based on their needs. However, scheduling the builds/updates becomes much more complex in the case of composite data products, since these may depend on multiple other data products all needing to be built/refreshed/updated themselves in order to be able to provide the freshest and most up-to-date data. These upstream data products may even have further data products upstream of them in turn, further adding to the complexity.

If a composite data product takes data from an upstream data product which has not had a recent successful build (or is otherwise "stale" or for any reason), then the composite data product will not be able to deliver fresh and accurate data and insights, due to its dependence on an upstream product whose own data is out-of-date. Naïve attempts to address this problem have all generally introduced one or more new problems of their own.

For example, one solution could be to set up carefully scheduled time-based triggers for initiating the build of each data product in a chain of dependencies up to the final composite data product. This solution relies on careful coordination and works poorly if one or more upstream data products are prone to taking longer than anticipated to update or refresh (e.g., a build pipeline sometimes takes longer than expected to finish executing), because the scheduled trigger for the downstream composite data product may then occur before the build of the upstream data product has finished. Similarly, if the build of an upstream data product fails, this cannot be accounted for if a build of the downstream composite data product blindly runs on the basis of a time-based scheduled trigger.

Another type of solution could be to have every data product within an organisation keep track of each downstream data product that depends upon it. This solution could be implemented in various ways. A single pipeline can be used to build all of the data products used in an organisation. Alternatively, parent-child pipelines can be used, whereby the final step of one pipeline involves triggering another pipeline, and so forth as many times as necessary. In either case, each upstream "producer" data product A needs to be aware of every one of its downstream "consumer" data products R, S and T so that it can directly trigger jobs/pipelines to build them once data product A has finished building.

In other words, each product's pipeline must know which pipelines from which products must run next, and then must call them directly when it completes. Not only must the data products each keep a record of all of their own dependants, but they must also have the requisite access and technical details needed to trigger their pipelines.

The problem with this is that it makes it is impossible to add more data products that depend on the upstream data product A without also updating A (the data product in question being depended upon). Critically, this type of solution suffers from a tightly coupled forward-facing manner of managing dependencies, where the successive completion of data product builds must be "pushed" by the upstream products rather than "pulled" by the downstream products. That is, the maintainer of A is required not just to be aware of R, but to actually code in the dependencies. Another data product (U, V or W) cannot start consuming A without changes being implemented by the team of developers maintaining A.

This problem is present even when each downstream data product R/S/T depends on at most one single upstream data product A. If a downstream data product R is dependent on multiple upstream data products A and B, the problem is compounded even further, since it will not necessarily be known which of A and B will finish its build first, and so rules must be built into each downstream data product specifying the conditions based on A and B for either commencing, blocking, waiting, or exiting the build pipeline. The extent and variety of this data is usually limited (as is the flexibility/power of any rule built into the downstream data product R to control when its build is triggered).

Moreover, there is at present a significant disconnect between the skills and knowledge of software teams and data teams. Those programmers who are skilled enough to be familiar with the tools, techniques and technologies available in the world of software engineering are generally oblivious to the current challenges facing the world of data engineering, and vice versa.

All of the solutions mentioned above therefore fall short of ideal, as do other known solutions. It would be advantageous to provide systems and methods that improve upon the present state of the art, such that flexible downstream composite data products can be built using the freshest and most accurate data possible, without negatively impacting the data products and their dependencies or limiting their modifiability.

### Summary

According to a first aspect of the present invention, there is provided a computer-implemented method for use in building a downstream data product, the method comprising: receiving a data product definition for the downstream data product, wherein the data product definition identifies one or more upstream data products on which the downstream data product depends, receiving data indicating the latest build for each upstream data product, determining, based on the received data and one or more user-defined update rules for the downstream data product, whether an update condition is satisfied, and in accordance with a determination that the update condition is satisfied, triggering a build of the downstream data product.

Advantageously, by learning the identities of upstream data products from the downstream data product's definition and by determining satisfaction of the update condition in a rule-based manner (without relying on time-based triggers to initiate the build), the present invention provides a loosely-coupled, easily modifiable and extendable solution that does not require upstream data products to maintain information about all of their consumer processes, and that can handle instances of builds failing or overrunning without causing time to be wasted. By having the rules specified by a user, greater power and flexibility is provided, enabling the update condition to be customised for different use cases.

Optionally, the data indicating the latest build for each upstream data product is published to a registry, and receiving said data comprises reading it from said registry.

Advantageously, by publishing it to the registry, the build data for each of the upstream data products is made accessible in a centralised location for further processes. The pipeline responsible for building each upstream data product A is not required to track A's downstream consumers but can publish this metadata/telemetry data to the same location on each run of the pipeline. Moreover, any newly added downstream data product R can find this build data for A centrally straight away, and can begin using it without needing any modification to be made to data product A or its pipeline as a prerequisite.

Optionally, the method further comprises the steps of triggering a build of an upstream data product on which the downstream data product depends, and upon completion of the build of the upstream data product, publishing data indicating said build to the registry.

Advantageously, this ensures that the registry is updated with the freshest available data indicating the latest build of the upstream data product as soon as the build finishes, such that downstream data products consuming data from the upstream data product can be built/updated/refreshed as quickly as possible with the fresh data available.

Optionally, the one or more user-defined update rules are published to a registry and determining whether the update condition is satisfied comprises reading said update rules from the registry.

Advantageously, by publishing them to a registry, the update rules are made accessible in a centralised location for further processes. This enables downstream data products to detect/infer successful completion of the right upstream data products and to handle cases where data from an upstream data product is missing or incomplete (e.g., if an upstream build pipeline fails) without requiring any complex logic or flags to be built into the downstream data product (or build pipeline thereof) itself.

Optionally, the step of determining whether the update condition is satisfied is triggered by either build completion of an upstream data product on which the downstream data product depends, or a time-based trigger, or an external trigger.

Advantageously, triggering the check of the update rules to determine satisfaction of the update condition by the completion of the upstream data product's build reduces or eliminates delay between the upstream data product being built/updated/refreshed to incorporate the freshest data, and said data (or derivatives thereof) subsequently being made available by the downstream data product.

Optionally, the method further comprises, upon completion of the build of the downstream data product, publishing data about said build to a registry.

Advantageously, this enables the build metadata for the downstream data product (version data, telemetry data, build completion timestamp, etc.) to be made available to consumers of this data product. For instance, this metadata can be checked if modifications are made to the specification of the downstream data product to determine whether the as-modified data product is backwards compatible with the latest version or whether a new branch must be created. Additionally or alternatively, this metadata can be used to determine when to trigger the build pipeline for a yet further downstream data product.

Optionally, the downstream data product is a composite data product dependent on a plurality of upstream data products.

Advantageously, this enables prompt and "smart" updating of the downstream data product even for the case where it has multiple upstream dependencies which themselves are data products. Such cases are particularly difficult to handle because they do not admit solutions in which a sole upstream data product simply triggers the build of each of its downstream dependants without further processing needed (this does not work for the case where e.g., A and B each provide data to R, because A will not typically be aware when the build of B finishes and vice versa - if each tries to trigger the build of R independently, either R must include its own logic for determining when to run based on the expected triggers, or the build will be triggered twice).

Optionally, the one or more user-defined update rules comprise an update rule whose satisfaction is determined based on both the time at which the latest build of an upstream data product finished, and the time at which the latest build of the downstream data product finished.

Advantageously, this permits a build/refresh/update for the downstream data product to be triggered intelligently on the basis of how out-of-date the downstream data product is compared to the upstream data product, i.e., on the basis of the amount of time (if any) for which the latest/freshest source data has been available to the upstream data product without being made available to the downstream data product.

Optionally, said update rule satisfies the update condition if and only if the latest build of the upstream data product finished more recently than the latest build of the downstream data product.

Advantageously, this permits a build/refresh/update for the downstream data product to be triggered intelligently on the basis of whether the downstream data product is at all out-of-date compared to the upstream data product, i.e., on the basis of whether the latest/freshest source data has been available to the upstream data product without being made available to the downstream data product for any amount of time at all.

Optionally, at least one user-defined update rule comprises either a formula in propositional or first-order logic, wherein determining whether the update condition is satisfied comprises evaluating the truth-value of the formula, or a function, script, or subroutine coded in a programming language by the user.

Advantageously, either of these options provides a computationally inexpensive means of defining and evaluating custom update rules for triggering a build of the downstream data product which nevertheless offers a high degree of flexibility and expressive power.

Optionally, at least one user-defined update rule comprises a logical combination of one or more freshness criteria and/or one or more data quality criteria.

Optionally, each freshness criterion specifies a property of, or relationship between, one or more of: the time at which the latest build of each of one or more upstream data products finished, the time at which the latest build of each of one or more downstream data products finished, and the current time.

Advantageously, using freshness criteria in this way enables a user to specify rules which maximise freshness of the data being used in and by downstream data products and their consumer processes, and/or which minimise delays involved in propagation of new data from data source to data consumer (which may be another data product or any suitable consumer processes). Advantageously, using data quality criteria enables a user to specify rules which ensure that data is obtained of the requisite level of quality for the downstream data product's purposes without incurring excessive computational costs or unnecessary delays.

Optionally, the one or more user-defined update rules comprise any one or more of: a rule satisfying the update condition if and only if a scheduled build of each of the upstream data products has finished, a rule satisfying the update condition if and only if a scheduled build of each of the upstream data products has finished successfully, a rule satisfying the update condition if and only if the latest build of each of the upstream data products satisfies a respective user-specified freshness criterion, or a rule satisfying the update condition if and only if the latest build of each of the upstream data products satisfies a respective user-specified data quality criterion.

Advantageously, each of these rules provide a practical, straightforward and easily computable way of determining whether to trigger a build of the downstream data product.

According to a further aspect of the present invention, there is provided a device comprising a processor and a memory, the memory comprising instructions which, when executed by the processor, cause the processor to perform the method of any one of the aspects described above.

According to a yet further aspect of the present invention, there is provided a non-transitory computer-readable storage medium comprising instructions which, when executed on a computer, cause the computer to perform the method of any one of the aspects described above.

### Brief Description of the Drawings

Embodiments are described in more detail below with reference to the appended drawings, in which:
Fig. 1 is a block diagram illustrating an exemplary platform for provision of one or more data products, and various components thereof;
Fig. 2 shows (at least a portion of) an exemplary data product definition;
Figs. 3a, 3b and 3c show, respectively: a visual representation of data in tabulated form; and relational and non-relational schema definitions for data which may form part of, or be used to derive, a data product; Fig. 3d shows two data product "snippets" that can be assembled to form a data product manifest; Fig. 3e shows the data product manifest;
Fig. 4 is a block diagram illustrating an exemplary pipeline in which a data product may be built;
Fig. 5 depicts several foundational data products, composite data products, and dependencies between these foundational and composite data products;
Fig. 6 graphically illustrates information flow in a process for triggering a build of a composite data product;
Fig. 7 depicts an exemplary architecture for implementing embodiments of the present invention;
Figs. 8a, 8b, 8c and 8d graphically illustrate several exemplary update rules;
Fig. 9 is a flowchart illustrating a method for use in building a downstream data product; and
Fig. 10 is a block diagram illustrating components of a typical computer system which may be used to implement some or all of the present invention.

### Detailed Description

The detailed description set forth below provides information and embodiments of the disclosed technology with sufficient detail to enable those skilled in the art to practice the disclosure.

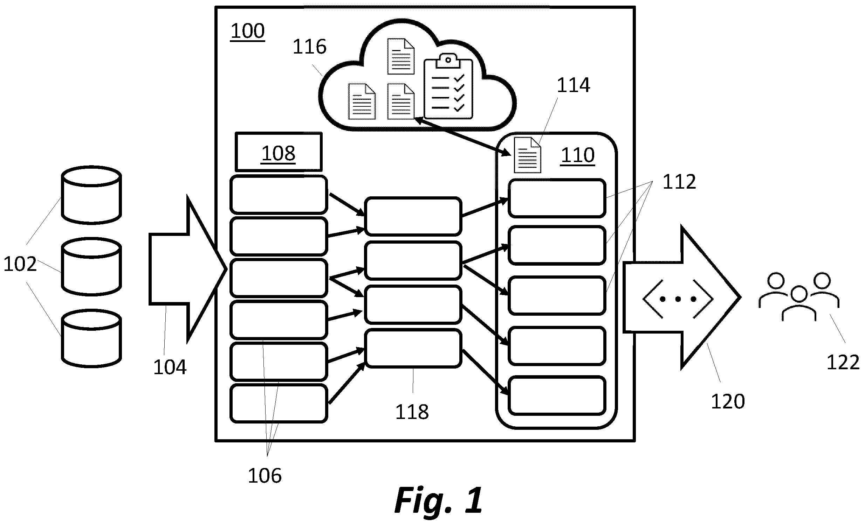

Referring to Fig. 1, there is depicted a typical data platform 100 supporting a data product 110. Data may be ingested from one or more data sources 102 via an ingestion process 104. The data may be ingested into a database 106, which may have a schema 108. In some embodiments, schema 108 may be a relational schema, with database 106 comprising a plurality of tables to hold the "raw" ingested data. Data product 110 may provide data 112 (e.g., in the form of various views, materialised views, and/or tables) derived from sources 102 to one or more data consumers 122 (depicted as users in Fig. 1 for the purpose of illustration only) via a data product interface 120. The data provided by data product 110 may be derived, in part or in whole, directly from the "raw" data in database 106. Additionally or alternatively, the data may be derived, in part or in whole, via secondary or intermediate data 118 in the form of one or more views, materialised views and/or tables which are themselves derived from database 106. The data product and its properties may be defined by a data product definition 114. Information about data product 110 may be published to a data product registry 116.

The components presented in Fig. 1 are now described hereinbelow in more detail. It should be recognised that except where explicit recognition is provided to the contrary (for instance by their inclusion in an independent claim of the appended claims), none of these components or features should be taken as essential for implementing the present invention.

### Data platform

A data platform (also referred to as a data management platform) may be any suitable infrastructure or ecosystem providing foundational capabilities for various data-related activities such as collecting, storing, managing, processing, analysing and/or accessing data efficiently and effectively. Kinds of data (management) platform include data clouds, data marts, data warehouses, data lakes and data lakehouses.

Various suitable existing data platforms will be known to those of ordinary skill in the art, and include (but are not limited to) Snowflake, Databricks, Google Cloud BigQuery, Microsoft Azure, IBM Db2, Oracle Cloud Infrastructure, and Amazon Redshift.

### Data product

Data products in general can be reusable data assets, services, or systems that use data to facilitate an end goal for users or organisations. Data products may integrate data from sources, process it, ensure compliance, and make the resulting data accessible to authorised data consumers. The data may optionally be made rapidly or instantaneously available to the data consumers. A data product isolates data consumers from the complexities of data sources, making the resulting data easily discoverable and accessible as a valuable digital asset.

Specific tangible examples of data products may include, for instance, reports, dashboards, datashares, machine learning models, and packaged applications. In various embodiments, a data product either is not just a software product or is not a software product at all. For example, data products may focus on leveraging data to generate insights or support decision-making, while software products focus on providing functionality through software applications or services. Data products may produce insights, analytics, or data-driven recommendations, while software products produce tangible outcomes or perform specific tasks. Data products may involve less direct user interaction and more automated data processing, whereas software products typically have user interfaces or APIs through which users interact with the software. In some embodiments the data product need not itself comprise any executable files (instead offering its functionality to data consumers via the data product interface(s), rather than executability).

The process of building a data product is an explicitly technical task, distinct from the mere activity of programming *per se*, or even developing a software product. Unlike an abstract computer program, a data product is implemented across real-world data infrastructure (comprising physical hardware such as servers for processing, storing and communicating data), and makes use of said infrastructure to transform and process the source data in a quantitative (rather than qualitative or cognitive) manner. Moreover, in several embodiments the source/ingested/input data used in the data product may itself comprise functional and/or technical data, including but not limited to sensor data, data from a control process (e.g., industrial control/SCADA), scientific data, or the like, further adding to the technical character of the data product and its build/deployment processes. Likewise, in several embodiments the data product may be configured to impose functional and/or technical constraints on data provided to data consumers in view of the nature of these consumers, who may for instance include consumers with technical limitations (size/memory constraints, etc.), control processes, or the like, further adding to the technical character of the data product and its build/deployment processes.

A data product may be a "standalone" data product (also referred to as a "simple" or "foundational" data product), such as data product 110 illustrated in Fig. 1. A standalone data product may be self-contained, delivering a specific data-related output to meet one or more data consumer requirements. The input to a standalone data product may be external data (in files, a relational database, behind an API, or any number of other data sources) which is ingested/loaded, curated, or transformed in some way, and then made available for downstream data consumers. Typically, when considering foundational data products, the downstream data consumer may be an analytical data consumer producing e.g., business intelligence reports/dashboards, or may be a data scientist.

Alternatively, a data product may be a "composite" data product. A composite data product is a data product which is assembled from multiple other data products. The output of an "upstream" data product can be used as one of the inputs to a "downstream" data product. Composite data products may integrate diverse datasets, formats, or levels of detail to provide a unified and enriched output. This advantageously allows enterprise-level queries to be answered by enabling cross-functional, cross-domain collaboration while ensuring data governance. For example, sales data from a first data product, customer data from a second data product and marketing data from a third data product may be joined using a composite data product to provide a 360-degree customer view.

### Data product definition

A data product definition, also known as a data product specification, may comprise a file, a collection of files, a database, an in-memory data structure, or the like, outlining the data product's characteristics, functionality, and requirements. The data product definition may be delivered from an API endpoint and/or from a data product registry. The data product definition is preferably a comprehensive document that provides clear instructions and guidelines for building and implementing the data product. The data product definition may include all of the properties necessary to build the data product, for example including (but not limited to) a data product name, a data product description, a data product version, input ports for the data product, output ports for the data product, service level indicators (SLIs), service level objectives (SLOs), and so forth. The data product definition may optionally include rules specifying when and/or how particular jobs or pipelines should be triggered.

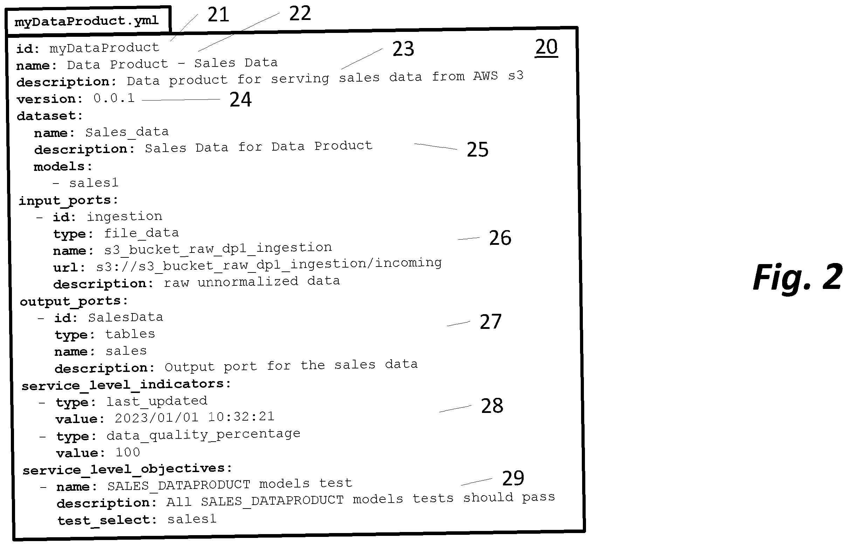

Referring now to Fig. 2, an illustrative embodiment of a data product definition 20 (i.e., a data product specification) is depicted. In some embodiments, data product definition 20 may specify a unique identifier 21 for the data product. In some embodiments, data product definition 20 may specify a name 22 for the data product. Name 22 may be a human-readable name and need not necessarily uniquely identify the data product. In some embodiments, data product definition 20 may specify a description 23 for the data product. The description may provide context summarising the purpose, intent and/or role of the data product to a human user/developer.

In some embodiments, data product definition 20 may specify a data product version 24. During development of a data product, a first data product specification for the data product may be developed and saved to a first file, and subsequently a second data product specification for the data product may be developed and saved to a second file. In such cases, each of the first and second file can define a distinct version of the data product. Two distinct versions of a data product may differ in terms of their specified dataset (e.g., the metadata of tables/views/materialised views that are part of the data product), their specified SLOs (e.g., in the names, semantics, and data types thereof), and/or their specified SLIs (e.g., in the names, semantics, and data types thereof).

In some embodiments, data product definition 20 may specify a dataset 25. Dataset 25 may refer to a collection of data objects, such as tables, views, functions, schemas, and descriptions. Data product definition 20 may comprise metadata of tables, views, and/or materialised views that are part of the data product, or at least may comprise one or more indications of where and/or how such metadata may be discovered (and/or one or more indications of where and/or how such metadata may be obtained). For example, as described in more detail hereinbelow, data product definition 20 may specify dataset 25 using a placeholder reference or extension point, such that when a relevant pipeline is run, a job of said pipeline retrieves the dataset's metadata and adds it to the source specification. This may occur, for example, as part of the process of publishing data product definition 20 to a data product registry (such as data product registry 116), such as in the form of a data product manifest.

In some embodiments, data product definition 20 may specify one or more input ports 26. Each input port may comprise a designated endpoint or interface through which data is received or ingested into the data product. In addition to the input port(s), data product definition 20 may further comprise one or more trigger rules and respective actions. These rules may specify the refresh conditions that must be in place in order for a refresh or re-build of the data product to occur).

In some embodiments, data product definition 20 may specify one or more output ports 27. Each output port may comprise a connection point made available by the data product, including for example (but not limited to) an S3 bucket, a Snowflake share, or a Snowflake role, among other options. Data product definition 20 may specify, for each output port 27, some or all of the information necessary for a data consumer to establish a connection (for instance, all of the necessary information excluding credentials).

In some embodiments, data product definition 20 may specify one or more service level indicators (SLIs) 28. Each SLI may be a metric that can be used to assess, qualitatively or quantitatively, the level of service provided by a system or service. SLIs may optionally include e.g., a current percentage of passed tests, the date and/or time of the most recent update, and/or a count of the number of rows that fail quality checks (which may be computed by pipeline execution).

In some embodiments, data product definition 20 may specify one or more service level objectives (SLOs) 29. Each SLO may be a collection of objectives and/or specific targets that the data product aims to achieve. For example, an SLO may include objectives declaring that data is no more than a specified number of hours old, or that a specified percentage/proportion of rows pass quality checks.

The exemplary aspects of data product definition 20 described hereinabove are provided purely for illustrative purposes and are by no means either exhaustive or limiting. None of these aspects should be considered essential for the provision of any data product definition more generally, which in practice may include any suitable combination of features, details and specified properties and parameters as would be readily understood by one of ordinary skill in the art.

### Sources & ingestion

At least some of data source(s) 102 may be external to data platform 100. Additionally or alternatively, at least some of data source(s) 102 may be internal to data platform 100. In some embodiments, data sources 102 may comprise a combination of internal and external data sources. At least some of data source(s) 102 may be in a multi-structured form. At least some of data source(s) 102 may be ingested in batch. At least some of data source(s) 102 may be ingested in real-time.

Data sources 102 may comprise on-premises and/or off-premises sources. Data sources 102 may comprise cloud sources, cloud services and/or cloud providers. Data product 110 may advantageously abstract the physical storage location of its source data from data consumers 122. In this way, data consumers can be isolated from the complexities of the various sources of data.

Almost any conceivable data source may provide a candidate for data source 102 as will be appreciated by those of ordinary skill in the art. As a handful of purely illustrative and non-limiting examples, data source(s) 102 can optionally comprise e.g., Salesforce, SAP, Marketo, Hubspot, website logs, application logs, surveys, files, sensor data, scraped web data, social media/text data, relational databases (e.g., MySQL sources), non-relational databases (e.g., one or more MongoDB sources), APIs (e.g., REST APIs), enterprise systems (e.g., customer relationship management, enterprise resource planning, or human resources management systems), or the like. One or more of data source(s) 102 (and/or the data therefrom) may be subject to source testing as described in more detail hereinbelow. The source testing may optionally include testing for data integrity and/or data freshness.

### Interface & data consumers

Data product interface 120 may provide a means by which a data consumer can interact with data product 110. Properties, parameters, setting and/or details of data product interface 120 may be defined in data product definition 114. For example, data product definition 114 may specify the format of any query that should be used by a data consumer 122, the format and/or content that the data consumer should expect from the response to their query, and/or various other patterns, properties or behaviours governing their interaction with the data product. Access to data and/or metrics of a data product may be e.g. via one or more of: APIs; a language like SQL; visualisation options; and so forth. The interface 120 may restrict data consumers 122 from accessing the raw data underlying the data product.

Data consumers 122 may include any one or more users that are authorised to access data product 110, e.g., human users, either within a business or organisation or external to it. Such human users may optionally include analytical users e.g., data analysts, data engineers and/or data scientists. Additionally or alternatively, data consumers 122 may include any one or more processes (e.g., automated processes and/or applications) that are authorised to access data product 110, e.g., processes within or external to a business or organisation. Data consumers 122 may be configured to produce dashboards, business intelligence reports, and the like. Data consumers may feed data from data product 110 into one or more further data products as input (i.e., composite data products).

In various embodiments, data product registry 116 can be accessible by data consumers 122. Advantageously, this can permit data consumers 122 to discover data products and view one or more aspects of respective metadata for these data products, such as certification or quality metadata, usage metadata, efficiency metadata, security metadata, and so forth.

Access control means may optionally be provided to ensure that for each given interface 120, only suitably authenticated and/or authorised users can access the output of data product 110 via interface 120. Access control means may vary depending on the nature of the interface, though in each case suitable means will be known to those skilled in the art. In various embodiments, role-based access control and/or attribute-based access control may be used.

Generally, a single data product 110 may have either one interface 120 or a plurality of interfaces 120. For instance, a plurality of interfaces 120 may be provided if data product 110 has more than one kind of target data consumer. To give a specific example, where a data product is using a specific data modelling technique such as Data Vault, a first interface 120 may provide data in native data vault format for use by data engineers looking to create automated systems or composite data products, whilst a second interface 120 may provide the same data flattened and normalised into some sort of data mart, to benefit any human users.

In addition, distinct interfaces 120 may provide output in different formats - for example, an interface 120 could provide data as a data share, as a query into a database, or as a set of one or more CSV files (e.g., a downloadable CSV file). These formats can be thought of as distinct interfaces for providing access into the same underlying data product.

In this way, data product 110 can be designed to allow multiple access approaches, such as low/no code or programmatic approaches. Different data consumers may be able to use different tools of their choice to access data. This includes analytical engines, IDEs, APIs like SQL or GraphQL, SDKs, reports, dashboards, and/or large language models (LLMs).

### Views, tables, & secondary data

As used herein, a "table" may generally refer to a basic structure in a database or data product (e.g., in a relational database) that organises data into rows and/or columns. In various examples, each row represents a record, and each column represents a field or attribute of that record. Tables may be used to store and manage structured data.

As used herein, a "view" may generally refer to a virtual table that is based on the result set of a query (such as an SQL SELECT query). The view may not store any data itself, but may instead be a saved query (e.g., SQL query) that can be executed to retrieve data dynamically from one or more underlying tables. Views may be used to simplify complex queries, abstract the underlying data schema, and/or enforce security and access controls by limiting the columns or rows that users can see.

As used herein, a "materialised view" may refer to a variant which, unlike a typical view, stores the query result in physical storage. Materialised views may be precomputed and refreshed periodically to ensure that the data they contain is up-to-date ("fresh"). This can speed up query execution by removing the need to compute the result set on every access. Materialised views may be used to improve the performance of complex queries or reports that involve aggregations, joins, or other computationally expensive operations.

The data product's data 112, and/or secondary data 118 from which it derives, may comprise any appropriate combination of tables, views, materialised views, or other kinds of structured data which may be computed or loaded in physical or virtual form. Secondary data 118 may be obtained by processing raw data in database 106 and/or by applying one or more queries to database 106 in a suitable query language. For example, structured query language (SQL) may be used to obtain secondary data 118 from database 106 (and, indeed, in some embodiments, to obtain data 112 from secondary data 118 and/or from database 106).

### Database & schema

Database 106 may store any kind of structured data according to a suitable schema 108. In some embodiments, database 106 may comprise a relational database. In other embodiments, database 106 may comprise a non-relational database such as a NoSQL database. Database 106 may comprise e.g., an object database, document database, time-series database, special database, graph database, or the like.

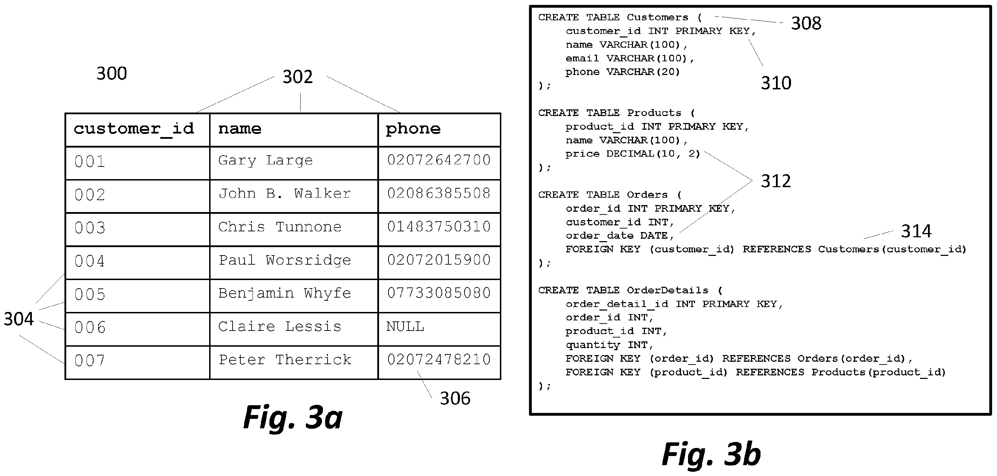

Fig. 3a depicts a simplified example of a table (or view) 300 as may typically be found in a relational database. In the relational model, data is organised into one or more tables like table 300, each having a plurality of rows 304 and columns 302. Each row may represent a distinct record, and each column may represent a distinct attribute, field, or property. A value 306 or a NULL entry may be provided for any given row-column pair. That is, each row/record 304 may comprise a value 306 (or NULL) for each column/field 302 (or equivalently, each column may be said to comprise a value (or NULL) for each row). The data in the relational database can be structured to follow a predefined schema defining the structure, constraints, and relationships of the data.

Fig. 3b depicts a definition in structured query language (SQL) for an exemplary schema. The exemplary schema may be a schema for a relational database, such as a database of the type in which table 300 of Fig. 3a may appear. The illustrated schema definition includes a plurality of table definitions 308, each declaring a distinct table for the database with a unique table name.

In the illustrated example, each table definition 308 comprises a primary key constraint 310, which uniquely identifies each record (i.e., row) in the respective table. A database management system implementing the relational database may enforce primary key constraint 310 in the sense of ensuring that the relevant column of each table is free of duplicate or null values.

Other constraints may be applied within the relational database. For example, each column/field may be subject to a datatype and/or length constraint 312, specifying the type of value that each record can take for that field (e.g., string, integer, decimal, date, etc.) and/or further qualifying that value in terms of e.g., allocated length, number of significant figures, and the like. Additionally or alternatively, one or more columns of a table may be subject to a foreign key constraint 314, establishing a link from a column in the referencing table (designated as a foreign key) to a column in the referenced table (e.g., a column designated as a primary key). A database management system implementing the relational database may enforce referential integrity between the foreign key and its target.

Still other constraints which may additionally or alternatively be applied and enforced within the relational database will be known to those of ordinary skill in the art.

It is not essential that a database used in accordance with embodiments of the present invention use a relational database, and other kinds of database may be used instead. Examples include non-relational databases such as a NoSQL (Not only SQL) database, object database, key-value store, document database, and so forth. The non-relational database may follow any one of a variety of possible schemas, including e.g., schemas having a nested structure or other more complex cases.

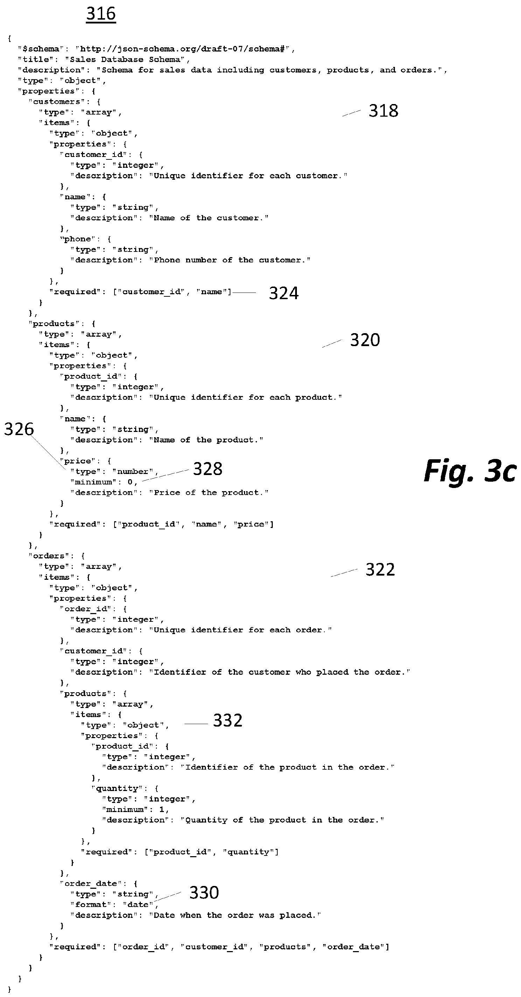

Fig. 3c depicts a definition in JavaScript object notation (JSON) for an exemplary schema 316. The exemplary schema may be a schema for a non-relational database, such as a database of the type in which the data seen in table 300 of Fig. 3a may appear (albeit without necessarily having a strictly rows-and-columns relational table structure). The illustrated schema definition includes a plurality of objects definitions 318, 320, 322 (respectively for customer data, product data and order data). Each of these top-level objects may be thought of as analogous to one of the table definitions 308 of Fig. 3b.

Schema 316 may comprise one or more structural or schema-based constraints. For example, a non-null or required constraint 324 may specify the presence of values in a given one or more columns as being essential. A database management system implementing the non-relational database may enforce required constraint 324 by ensuring that a value is always provided for each column designated as necessary.

Schema 316 may additionally or alternatively comprise one or more field-level constraints, i.e., constraints on values taken by fields rather than at the database's structural level. For example, field-level constraints may include any one or more of: datatype constraints 326, range constraints 328, format constraints 330 (specifying a particular pattern or regular expression that data in a field must match), or any other appropriate field-level constraint known to those of ordinary skill in the art.

Another example of a field-level constraint is a value-list constraint (sometimes called an "enum" or "enumerable" constraint), which specifies that the value taken by the field must be one of a finite number of predefined acceptable values (e.g., in a list) - for instance, a value-list constraint for a field called "day" may require a value equal to one of "MON", "TUE", "WED", "THU", "FRI", "SAT" or "SUN".

Schema 316 may in some embodiments have a "flat" structure, i.e., wherein all of the data is representable as a single table of rows and columns. However, in various embodiments a schema 316 may include nesting 332 - each object may optionally include reference to one or more further objects and/or one or more arrays, and each array may optionally include reference to one or more further arrays and/or one or more objects. In the example shown in Fig. 3c, for instance, "orders" defines an array of objects, each object having a "products" property which itself defines an array of objects, each object having a first integer uniquely identifying a product and a second integer identifying a quantity ordered of that product. In this manner, nesting 332 can permit the representation of complex data structures and relationships within the schema of a database.

### Data product registry

Referring again to Fig. 1, information about data product 110 may be published to a data product registry 116 (also referred to as a "data product catalogue", or a "data product marketplace"). Data product registry 116 may be part of (and/or hosted by) data platform 100. Data product registry 116 may be accessible by data consumers 122.

Data product registry 116 may store information about each of a plurality of data products, thus effectively acting as a repository for data products and associated data (e.g., associated metadata) and allowing the data products (and (meta)data) to be discovered. The information stored about each data product may be based at least in part on its data product definition/specification 114. Additionally or alternatively, the information stored about each data product may be based at least in part on its data product interface 120. The stored information may comprise e.g. information about the operations of a data product, such as definitions of how data can be acquired by a data consumer from the product, what it should include, the quality of data and service level the data consumer can expect, and so forth. Where applicable, the published interface of data product 110 preferably provides the sole means for access by data consumer 122, such that no "back door" to the underlying data exists.

Data product registry 116 may comprise one or more builds of data product 110, including for example the latest (most recent) build of data product 110. Data product registry 116 may store versioning information (e.g., one or more data product versions) for each of its data products. Data product registry 116 may be searchable.

Data consumer 122 may use data product registry 116 to identify rating, quality, and/or certification information about a plurality of data products, which can be beneficial in deciding which data product to use. For example, if there are 15 data products named "quarterly sales," a data consumer can determine which one is approved, such that all members of a team are working with the same numbers. At the same time, data managers can remove, rename, or annotate the other 14 instances.

Data product registry 116 may be configured to record and/or provide (e.g., to a data consumer) usage data and/or consumption data for the plurality of data products. This can serve to inform a user which of the data products are in use more frequently or less frequently, helping them to discover "data tribes" and/or to make determinations about which data products are unused and can safely be retired. Optionally, data product registry 116 may be configured to use automation to mark data products as stale based e.g., on pattern and usage analysis. This can advantageously help to reduce "data debt".

Data consumer 122 may use data product registry 116 to explore operational metadata for data products, such as security access rights, data creators, version numbers, purpose, and user consent. A data consumer may use the registry to calculate productivity via "data telemetry," such as the frequency of releases, number of data-related goals and objectives met, the level of buy-in, and support for the data strategy within an organisation.

As mentioned above, the information about any given data product 110 stored in data product registry 116 may be based on data product definition 114. Embodiments are envisioned in which data product definition 114 is published directly to data product registry 116 in its entirety. However, in other embodiments, data product definition 114 may act as a "base" definition, whilst the data published to data product registry 116 is a more complete or more populated set of metadata, derived from said base definition. For example, this "complete" definition/specification may extend, enhance, enrich, or otherwise "flesh out" the base definition provided by data product definition 114. The set of data ultimately published to data product registry 116 about any data product 110 may be referred to as a "data product manifest".

### Data product manifest

A data product manifest may be a file or document that outlines the properties and/or metadata of a data product, to provide data consumers 122 with essential information for using the data product. The data product manifest can thus define a "contract" between the data product and its consumers. The data product manifest document may be stored e.g., in the data product registry.

The data product manifest may be provided in a machine-readable format and/or in a human-readable format. A machine-readable manifest of a first data product may be used to automate one or more inputs of a second (composite) data product that consumes the first data product.

There are various ways in which a data product manifest may be created from a base or incomplete (i.e. not yet fully populated) data product definition, as will now be explained.

In some embodiments, data product definition 114 may comprise one or more "extension points", "base definitions" or "placeholders", which may be in the form of code and/or markers left in a file by a data product developer. These extension points may then be filled and/or replaced with more detailed information by one or more processes, for example by one or more jobs running in a pipeline (described in more detail hereinbelow).

A data product manifest may be created from a data product definition using any suitable means that will be known to those of ordinary skill in the art. For example, the data product manifest can be created by running one or more jobs or processes. In some embodiments, a pipeline can be used to create the data product manifest from a data product definition, though it will be understood that such a pipeline is not essential. In some embodiments, the pipeline may publish the latest data product manifest (or similarly, update the details of the published data product manifest) every time it is run.

During the pipeline run, data product definition 114 may be validated, enriched with metadata, and deployed to data product registry 116. One or more jobs of the pipeline may read data product definition 114 and/or provide the above-mentioned enriching metadata.

For example, in one illustrative implementation, during the pipeline run, one or more jobs of the pipeline may generate data product "snippets". At the end of the pipeline, the data product orchestrator produces the data product manifest from the specification and these data product snippets. A pipeline (and moreover, any particular job therein) may produce more than one data product snippet.

In any case, at the end of the pipeline's execution, the data product manifest can be generated as a merged document and published to data product registry 116.

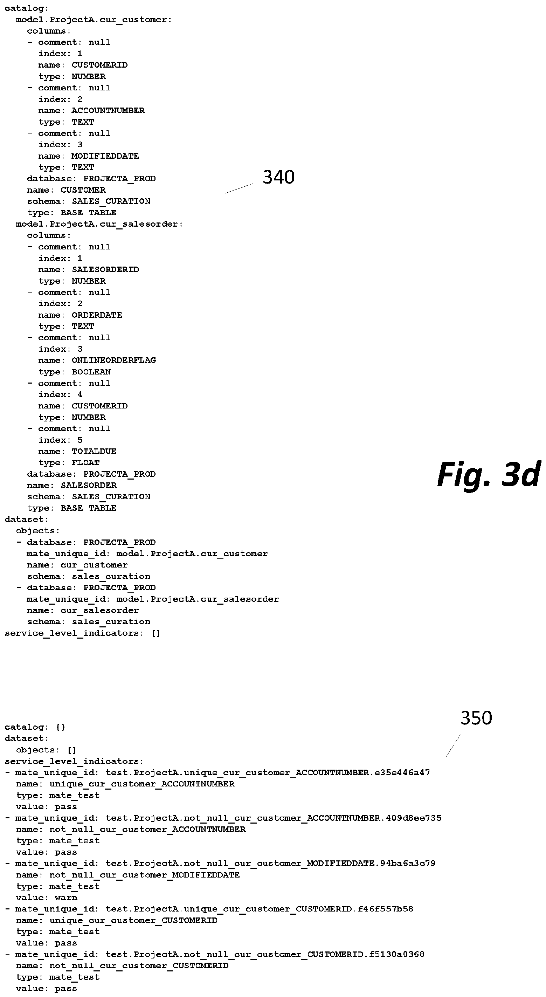

Fig. 3d depicts an exemplary data product definition 340 and a data product "snippet" 350. The data product snippet may comprise a set of metadata relevant to the data product. The data product snippet may be generated by an automated process or job. The automated process or job may be a part of a pipeline (e.g., an automated pipeline) or a stage thereof.

As can be seen in Fig. 3d, data product definition 340 comprises: data pertaining to tables of a data product; for each table, data pertaining to the columns of the table; and, for each column, a constraint (in this case a datatype constraint). Data product definition 340 as illustrated in Fig. 3d does not comprise definitions of any service level indicators. By contrast, data product snippet 350 does not comprise definitions of tables or columns, but comprises a plurality of definitions for service level indicators of the data product and their values. The service level indicators may comprise uniqueness tests and/or non-null tests, as shown in the illustrated example.

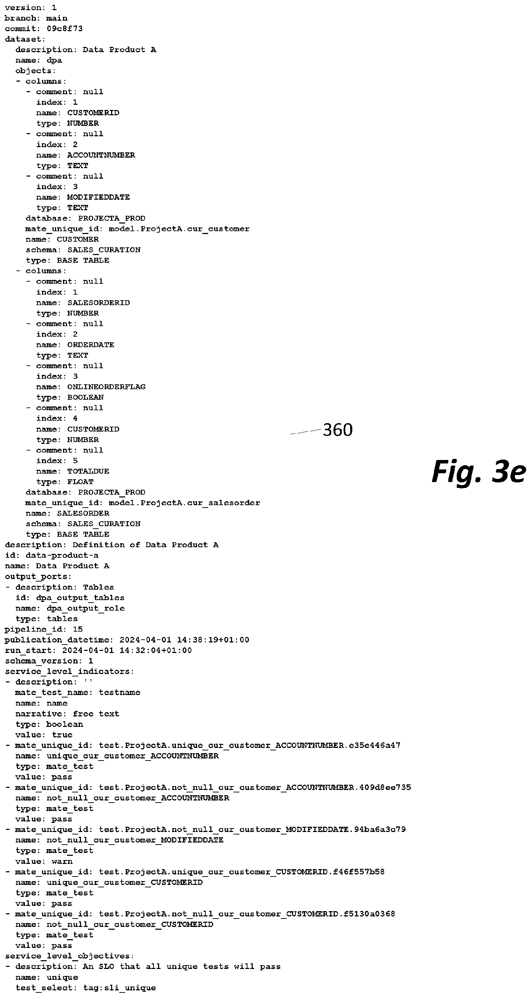

Fig. 3e depicts a data product manifest 360 which may be generated as a consequence of "stitching" together data product definition 340 and data product snippet 350 (and optionally one or more additional snippets). The stitching may comprise incorporating snippet 350 into definition 340 using the extension points/placeholders therein. A pipeline may produce data product manifest 360 from a plurality of snippets generated by a plurality of jobs. Each snippet may be generated by a different job in some embodiments.

### Pipelines & data product builds

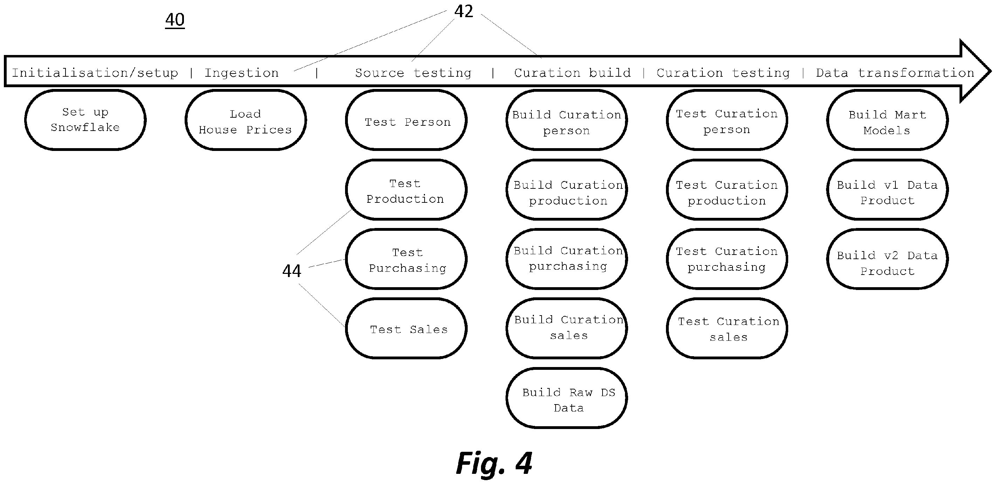

Data products may be built from their data product definition using any suitable means that will be known to those of ordinary skill in the art. In some embodiments, the data product can be built by running one or more jobs or processes. In some embodiments, a pipeline may be used, though it will be understood that such a pipeline is not essential. Referring now to Fig. 4, there is depicted an exemplary automated pipeline 40 that a data platform (e.g. data platform 100) may execute. Pipeline 40 comprises a plurality of jobs 44, which may optionally be organised (as illustrated) into a plurality of stages 42. Each job 44 represents an individual step of the process for ingesting data and transforming it into the final data product. In some embodiments, jobs may run either successfully or unsuccessfully (i.e., may "succeed/pass" or "fail"). In some embodiments, failure of one job 44 may cause pipeline 40 as a whole to fail. This may entail the pipeline and/or one or more of its jobs being interrupted before execution is finished; additionally or alternatively it may entail interruption of the pipeline without building one or more models, artifacts or data products; without deploying a data product; and/or without publishing metadata about a data product.

In some embodiments, all jobs of a pipeline may be performed successively in a sequence with each job commencing only after the previous job has finished. Advantageously, in some embodiments parallelisation may be used to speed up the overall pipeline, with two or more jobs from the same stage running concurrently, with synchronisation only applied at the stage level, rather than the job level. One or more desired pipeline behaviours may be specified by a user of data platform 100. Additionally or alternatively, information about the "latest" pipeline run by a data product developer (and/or about its resultant build) may be shown to the developer (e.g., the pipeline status such as "running", "completed/success", "terminated/failure" or the like), for example via a development environment.

Information about the latest pipeline run and/or its resultant build may also be made available by any suitable means to one or more automated processes. For instance, information may be stored in a data product registry and/or provided to a rules engine concerning start and/or stop times of builds of data products, the status (success/failure) of the builds, and/or the like. The rules engine can use this information to determine when to take further action such as triggering a build of a downstream composite data product, as described in more detail hereinbelow.

Pipelines may be used to implement a variety of different behaviours, such as hourly, daily, or weekly ingestion jobs. A pipeline may in general comprise jobs for moving data, virtualising data, transforming data, and/or caching data in memory. A pipeline may comprise a data lakehouse, a data fabric, or the like. A pipeline may provide orchestration capabilities to ensure that the jobs in the pipeline are executed in the correct order and dependencies are met, thus increasing reliability, and reducing the risk of errors. In some embodiments, the structure of jobs within the pipeline may comprise a directed acyclic graph (DAG).

Each pipeline may be defined in a file of any suitable form (e.g., a configuration file comprising a markup language such as YAML). The pipeline file may be populated with code provided by a data product developer. A data product developer may be able manually to run (i.e., execute) the pipeline once defined. Individual jobs within the pipeline may be written in suitable language (e.g., YAML). Each job definition may be written in such a way as to identify the pipeline to which it belongs (and optionally, where applicable, the stage of said pipeline to which it belongs). Whilst a pipeline may in various embodiments be defined in a single monolithic file, it may be advantageous for development to split the pipeline conceptually into individual jobs having their own files. Optionally, to further aid development, the development environment may permit a data product developer to define stages and/or parameters for the pipeline too (which may be also defined in their own files).

A "stage" of a pipeline can be used to define a subset of jobs from the overall pipeline which are to be executed in parallel. "Variables" which control the behaviour of a pipeline and/or its individual jobs/stages may be defined.

In some embodiments, as illustrated in Fig. 4, pipeline 40 may comprise one or more platform setup jobs 44 (e.g., in a platform setup stage 42), via which a data platform (such as Snowflake) can be automatically configured and/or where bootstrapping may occur.

In some embodiments, pipeline 40 may comprise one or more ingestion jobs 44 (e.g., in an ingestion stage 42), in which the data is collected from the various sources (such as databases, files, APIs, streaming platforms, or other suitable data sources such as those mentioned elsewhere herein).

In some embodiments, pipeline 40 may comprise one or more source testing jobs 44 (e.g., in a source testing stage 42), in which tests are executed upon the source data (e.g., as loaded in database 106) to validate completeness, accuracy, consistency, quality and/or other desirable criteria expected from the source data. The results of source testing may be fed to one or more data product manifests as described herein.

In some embodiments, pipeline 40 may comprise one or more build jobs 44 (e.g., in a source testing stage 42), in which a build may be generated for the tables/views 112 of data product 110, for the tables/views in intermediate data 118, and/or for any other models built according to pipeline 40.

Other examples of jobs/stages which may form part of pipeline 40 include e.g., jobs/stages for initialisation of a data vault; jobs/stages for data transformation; jobs/stages for testing of the transformation/transformed data to validate the transformation; jobs/stages for automatically generating documentation for data products built in the pipeline; and/or jobs/stages for automated cleanup at the end of pipeline execution. Other suitable examples of pipeline jobs, stages, variables and configurations will be readily apparent to those of ordinary skill in the art.

### Composite data products & dependencies

Referring back to Fig. 1, data product "dependencies" may refer to the relationships and interdependencies between different data products organised hierarchically within an ecosystem. Optionally, in the case of composite data products (where some data products are dependent on other data products for their input data), dependency information may be published to data product registry 116 along with the other data, thus providing a "single source of truth" for relationships between the data products in the composite case.

Data platform 100 may store some or all of the information defining dependencies in composite data products, and/or may comprise a rules engine for managing dependencies and updates. In some embodiments, the composite data products' dependency information may be stored in data product registry 116, for example, or any suitable part of platform 100.

The data product dependencies may inform the implementation of a composite data product. For example, data platform 100 may provide a platform to manage data product dependencies using one or more data product definition/specification files, registries, and/or data product manifests. A pipeline can use the data product definitions and known dependencies to build the data product, create a data product manifest, and publish it into the central project registry, thus enabling communication among all data products.

Data products can be arranged in levels within a hierarchy, starting from the source data products, followed by intermediate data products, and finally leading to data consumer-facing data products. Each level in the hierarchy may be a building block for the subsequent level, providing processed, transformed, or aggregated data that is further refined or used by the higher-level data products. Pipelines can be run to build data products, update data products, and refresh data within the data products to create different versions of the data products when changes are made.

Composite data products may integrate diverse datasets, formats, or levels of detail to provide a unified and enriched output. A data product platform can in general offer various features and capabilities to aid management of composite data products, including data product registries, data product dependencies, and/or a rules engine for expressing such dependencies.

As an example, consider a "Inventory" Data Product that exposes a "Product ID" column wherein, in order to find out anything about this product, such as its name, type, or category, a join operation must be performed on to the "Product" Data Product. It would be undesirable if the majority of data product users in an organisation were having to do this joining themselves upon every access. In this example, it may still be appropriate to retain the two isolated or standalone Data Products for Inventory and Product, but a third, composite data product can also be provided and maintained which provides a joined, flattened view of the relevant data, optimised for analytical use cases.

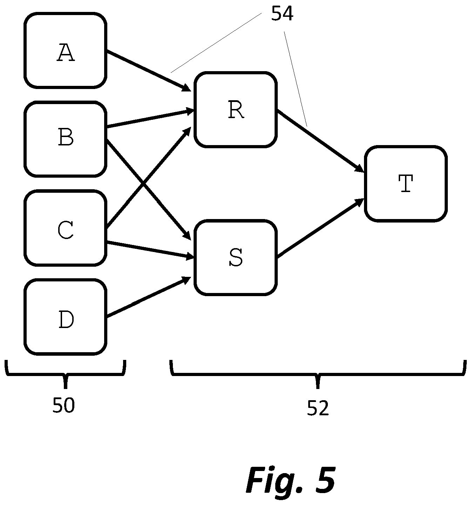

Referring now to Fig. 5, a plurality of data products 50, 52 and dependencies 54 therebetween are depicted. The depicted data products include, by way of illustrative example, a plurality of foundational data products 50, and a plurality of composite data products 52. Foundational data products 50 can be each configured to take their respective data from some suitable data source which is not itself a data product, e.g., by a suitable ingestion process with one or more suitable transformations also optionally applied. The data sources (not pictured) can include any suitable source mentioned herein such as one or more applications or APIs, one or more databases, one or more streams, one or more files, one or more sensing devices, and so forth (or any combination thereof).

Composite data products 52 may include any one or more of foundational data products 50 among their sources (though it will be appreciated that this need not preclude composite data products from using other data sources which are not themselves data products). Additionally or alternatively, composite data products 52 can include any one or more other composite data products 52 among their sources. For instance, in the illustrated example of Fig. 5, composite data products 52 labelled "R" and "S" depend on foundational data products 50 labelled "A", "B", "C" and "D", whilst a composite data product 52 labelled "T" depends on the composite data products labelled "R" and "S".

Also pictured are a plurality of dependencies 54 between pairs of data products 50, 52. Dependencies refer to the relationships between different data products, which can be organised hierarchically within a data platform. In this hierarchy, data products may be arranged in multiple levels, e.g., starting from the source data products, followed by intermediate data products, and finally leading to data-consumer-facing data products. Each level in the hierarchy can act as a building block for the subsequent level, providing processed, transformed, or aggregated data that is used (and/or further refined) by the higher-level data products.

A key consideration when building such a logical hierarchy of data products, where data-consumer-facing data products are built on intermediate products built on source data products, is how to automate, propagate, and trigger data refresh through this hierarchy. In embodiments, every data product may have its attributes and/or its data structure representation(s) stored in the central project registry, where a user can write rules to decide the behaviour of the data products based on these attributes, without any limits to the nesting and depth of compound data products.

As used herein, a first data product "depends" on a second data product if the second data product supplies data to (i.e., is a source of data used by) the first data product. In the example of Fig. 5, for instance, the composite data product 52 labelled "R" depends on the foundational data product 50 labelled "A". It may be said that R "depends" on A, or that R is "a dependant of" A, or that A is "a dependency of" R. It will be appreciated that throughout the present disclosure, any expressions of data product dependency as used herein will in general be clear from the surrounding context in which they appear when interpreted in view of the common general knowledge of the person of ordinary skill in the art.

Likewise, the foundational data product 50 labelled "A" is described as being "upstream" of the composite data product 52 labelled "R", and the composite data product 52 labelled "R" is described as "downstream" in relation to the foundational data product 50 labelled "A". The relation of being either "upstream" or "downstream" may be thought of as a transitive relation, such that when R is downstream of A and T is downstream of R, T is consequently downstream of A (as illustrated). Similarly, A is upstream of T by transitivity.

It is contemplated that in at least some embodiments, the set of dependencies 54 between the data products may be acyclic (i.e., without any cycles or self-loops). That is, dependencies 54 may be configured such that no data product is either upstream or downstream of itself, or dependent on (or a dependant of) itself. In some embodiments, the set of all dependencies 54 between data products 50, 52 forms a directed acyclic graph.

### Triggering a composite data product build

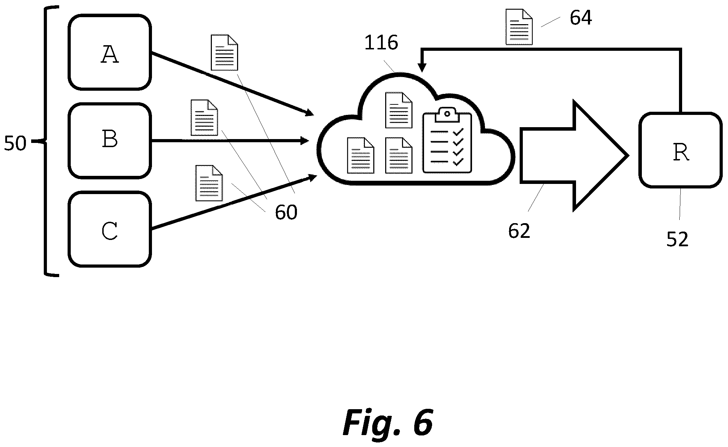

Referring now to Fig. 6, an exemplary flow of information in a process for triggering a build of a composite data product is graphically depicted. As shown in Fig. 6, upstream data products 50 (labelled "A", "B" and "C"), which may be either foundational or composite data products themselves, publish information 60 to a data product registry 116 indicating their latest builds.

Information 60 may optionally comprise data about the latest build/update of the upstream data product(s). Information 60 may optionally comprise freshness information e.g., start and/or end timestamps for the build's initiation/completion. Additionally or alternatively, information 60 may optionally comprise data quality information e.g., in the form of SLIs and/or SLOs, their values and/or the data associated therewith. Additionally or alternatively, information 60 may optionally comprise an indication of whether the build completed successfully (and/or details of why the build failed if not). Information 60 may comprise one or more warnings or alerts triggered during execution of the build pipeline for one or more of upstream data products 50. Information 60 may be or may comprise data product metadata and/or data product build metadata. Information 60 may comprise versioning information. In a preferred embodiment, information 60 comprises a data product manifest of the (or each) upstream data product. Information 60 may comprise data product telemetry data.

Data product registry 116 in Fig. 6 may optionally be substantially similar to data product registry 116 as described in relation to Fig. 1 or may at least comprise the same features and characteristics thereof.

A downstream data product 52 (here labelled "R") is also depicted. Downstream data product 52 can publish a ruleset 64 comprising one or more user-defined update rules for downstream data product 52 to data product registry 116.

At some point a situation can arise wherein ruleset 64 can be considered satisfied by the data available to data product registry 116, which can include information 60. That is, a "hit" or a "match" occurs for ruleset 64 - for instance, in an example where the update rules for downstream data product require that the latest build of all upstream products 50 (A-C) is no more than 12 hours old, these rules will be satisfied if the current time is 19:00 and information 60 includes a data product manifest for each upstream data product showing their last successful completions as having completed at 08:00, 10:00 and 12:00 respectively. On the other hand, in the same example, the rules will not be satisfied if the manifests show the last successful completions as 06:00, 08:00 and 10:00 (the first of these being too long before the present time to satisfy the required freshness).

When such a situation arises (i.e., the update rules are satisfied), a build of downstream data product 52 can be triggered. For example, a pipeline can be triggered and used to build/refresh/update 62 downstream data product 52.

The step of determining whether the update condition is satisfied (e.g., evaluating the relevant formula(e), executing the relevant code, or the like) may be triggered upon build completion of an upstream data product on which the downstream data product depends. The step may be triggered by the completion of that build - in other words, the upstream data product's build completion may be the event in response to which satisfaction of the update condition is determined (based on the user-defined update rules).

Nevertheless, alternative triggers for the determination to be performed are contemplated. For instance, the step of determining whether the update condition is satisfied may be triggered by an external trigger (e.g., an API call). As another example, the step of determining whether the update condition is satisfied may be triggered by a time-based trigger (for instance, at regular five-minute intervals, the update rules for the downstream data product may be checked/evaluated to determine whether the update condition is satisfied).

In any case, if the update condition is satisfied, the build of the downstream data product can in various embodiments be triggered (e.g., immediately triggered) by or upon the determination being made that this is the case. The build may be triggered in response to (e.g., directly in response to) the determination being made that the update condition is satisfied.

### Exemplary architecture

In various embodiments, a data platform can use a data product rules engine to handle dependencies (simple or complex) between data products, ensuring that all data products on the platform are built and managed efficiently. The rules engine can handle product orchestration by triggering pipelines based on the rules set in the data product specification and/or on user-defined update rules. For instance, one part of a data product specification may specify one or more rules, with another part of the data product specification specifying one or more actions triggered by each respective rule.

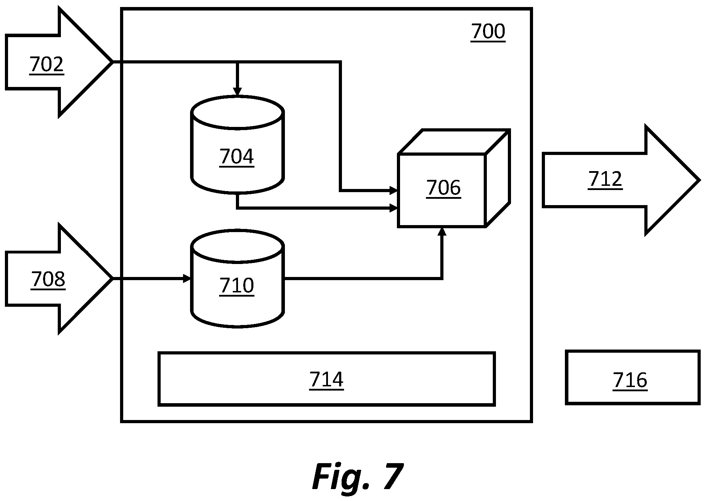

Referring now to Fig. 7, there is depicted an exemplary architecture for implementing embodiments of the present invention. In various embodiments, a framework may be provided to manage data product dependencies using a specifications file, registry, and manifest for each data product. A pipeline uses the data product specifications and dependencies to build one or more data products, create one or more data product manifests, and publish the created manifest(s) into a central registry, allowing communication among all data products. Pipelines may comprise rules to build data products, update them, and refresh their data to create different versions of the data products once there are any changes.

A system 700 effectively acts as a marshalling system with which data products can be registered, and which data products alert (e.g., via an API or some other message) when their data refresh completes. At this stage, they can send a set of telemetry data related to the data product. All of a data product's dependencies and/or dependants can also be registered with system 700, which can then initiate (either directly or indirectly) their build/refresh pipelines based on update logic which is help within system 700.

In the illustrated embodiment, system 700 receives data product telemetry updates 702 and data product definitions 708. Data product definitions 708 can include data product dependency information. System 700 comprises state storage 704 and definition storage 710, the two of which can either be implemented in the same physical or logical storage location, or in separate locations (on the same hardware device or separate devices). System 700 further comprises a rules engine 706, and is responsible for performing one or more actions 712. Actions 712 may include one or more further pipelines, such as one or more further build pipelines. An action 712 may include triggering a build of a downstream data product, e.g., a composite data product dependent on an upstream data product.

In optional yet advantageous embodiments (including the illustrated embodiment), system 700 can also include a roles/permissions model for implementing security and access control. Also optionally (yet advantageously) present may be a rules test toolkit 716 - rules test toolkit 716 may optionally provide a user with means for encoding a plurality of test states/scenarios for a ruleset and determining, for each test state/scenario, whether the ruleset is considered satisfied by rules engine 706. In cases where a developer is building a non-trivial ruleset of update rules, the inclusion of rules test toolkit 716 is highly beneficial since it enables testing/validation of rules without having to wait the usual expected period of several hours or even days for the right build pipelines to trigger and complete.

Telemetry updates 702 are stored in state storage 704. In the illustrated embodiment, telemetry updates also provide an update, alert or trigger to rules engine 706 upon completion of a build of any upstream data product. Data product definitions and dependencies are stored in definition storage 710. One or both of state storage 704 and definition storage 710 can be accessed by rules engine 706 for the purposes of evaluating one or more update rules in response to a trigger (e.g., completion of a data product build).

The data flow and architecture depicted in Figs. 6 and 7 produce the result that for any downstream data product depending on some upstream data product, only the downstream data product is required to have (i.e., define or store) any information describing its (own) update rules. Critically, the upstream data products 50 are not required to have any knowledge of the ruleset 64 for updating downstream data product 52 - upstream data products 50 can be defined, amended, modified, used, tested, catalogued, shared, made available and so forth without ever needing to be aware of which downstream data products are dependent upon them, or of the rules that define when or how these downstream data products will be built, updated or refreshed. The downstream data product can be made solely responsible for setting all of the criteria used to determine whether each upstream data product is sufficiently "fresh" or whether its data are of sufficient quality (according to downstream-data-product-defined criteria, SLIs and/or SLOs).

### Exemplary update rules

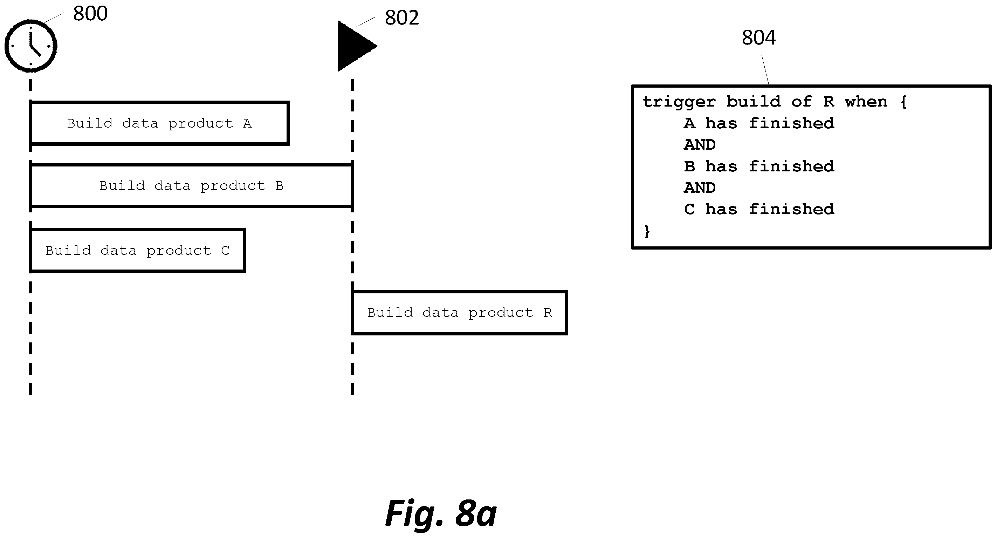

Referring now to Figs. 8a-8d, several exemplary update rules are graphically illustrated.

As shown in Fig. 8a, an update rule 804 may be provided such that the build, update or refresh is triggered if and only if a build of each of the upstream data products has finished. In the illustrated example, builds of upstream data products A, B and C are initiated in response to a scheduled trigger 800, with the build of downstream data product R being initiated in response to a rule-based trigger 802 using update rule 804.

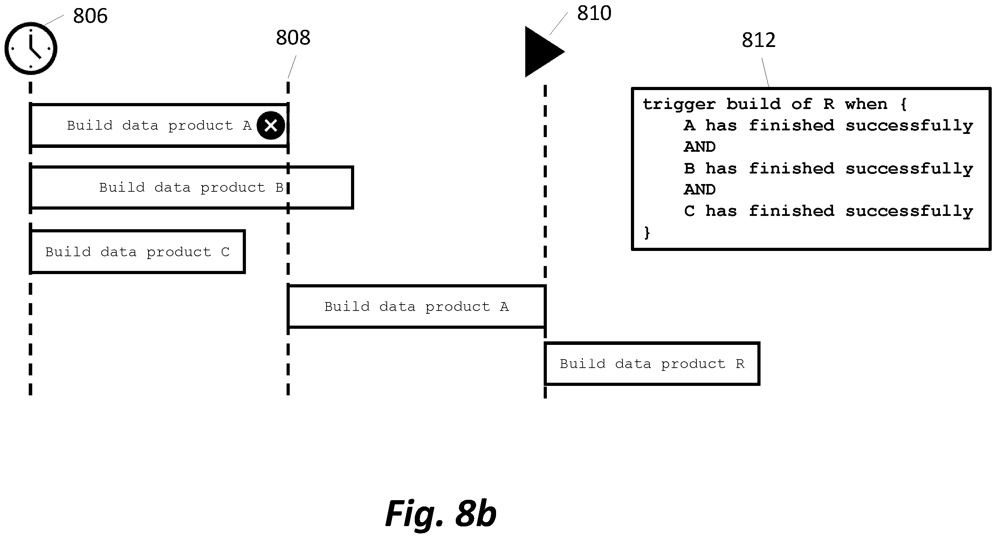

As shown in Fig. 8b, an update rule 812 may be provided such that the build, update or refresh is triggered if and only if a build of each of the upstream data products has finished successfully. In the illustrated example, builds of upstream data products A, Band C are initiated in response to a scheduled trigger 806. Although the builds of data products B and C complete successfully, the build of data product A fails. At a time 808, a further trigger (which may be either user-initiated or automated) restarts the build of data product A. Upon successful completion of this build, the build of downstream data product R is initiated in response to a rule-based trigger 810 using update rule 812.

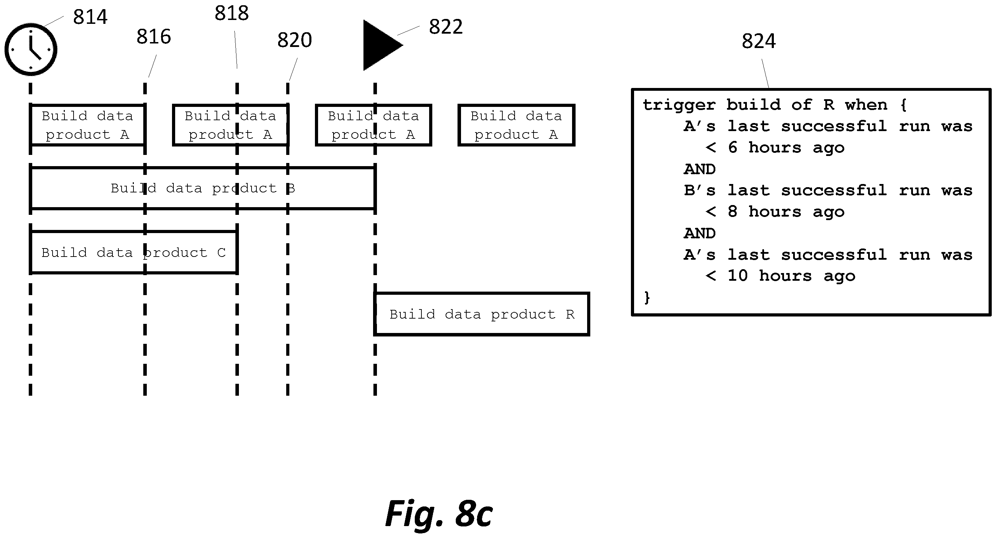

As shown in Fig. 8c, an update rule 824 may be provided such that the build, update or refresh is triggered if and only if the latest build of each of the upstream data products satisfy a respective user-specified freshness criterion - in this case, the criteria are that the last successful build of each of A, B and C reached completion within the last 6, 8 and 10 hours respectively. In the illustrated example, a scheduled trigger 814 initiates a build of data product A every four hours, initiates a build of data product B daily at midnight, and initiates a build of data product C daily at midnight too.

At a first time 816, although the build of data product A has reached completion (and so the rules engine may be prompted to inspect, evaluate or execute the update rules), the build of R cannot yet be triggered since data products B and C are not "fresh" enough - there has not been a sufficiently recent completion of a build of data product B or C.

At a further time 818, although the build of data product C has reached completion (and so the rules engine may be prompted to inspect, evaluate or execute the update rules), the build of R cannot yet be triggered since data product B is not "fresh" enough - there has not been a sufficiently recent completion of a build of data product B.

At a further time 820, although the build of data product A has reached completion (and so the rules engine may be prompted to inspect, evaluate or execute the update rules), the build of R cannot yet be triggered since data product B is still not "fresh" enough.

Finally, upon successful completion of the build of data product B, the build of downstream data product R is initiated in response to a rule-based trigger 822 using update rule 824.

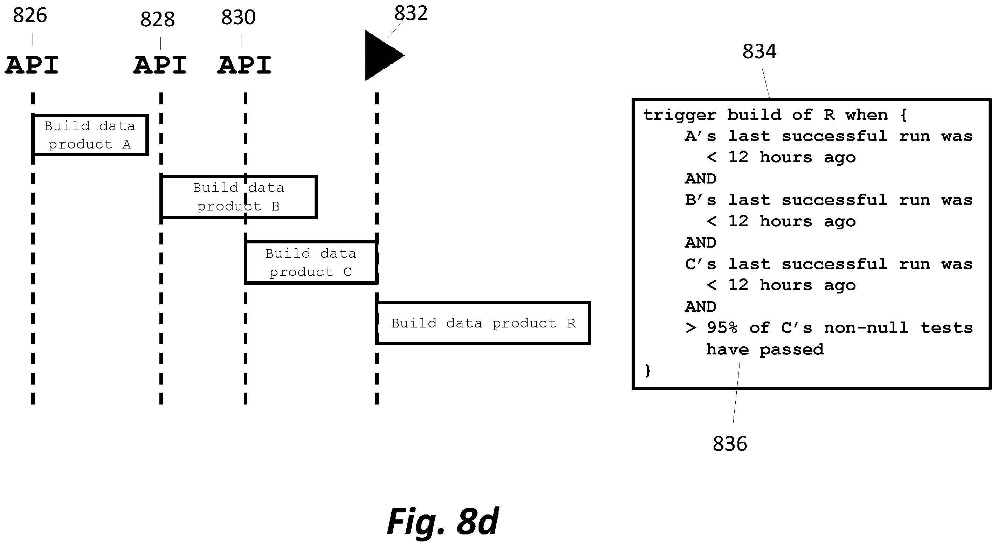

As shown in Fig. 8d, in some cases the upstream data product(s) may be built in response to triggers other than scheduled or rule-based triggers. In the illustrated example, an update rule 834 is again provided. As before, the build of downstream data product R is initiated in response to a rule-based trigger 832 using the update rule 834. However, unlike the other examples, upstream data products A to C are triggered to build by one or more external triggers - in this case, each of the external triggers is an API call. In cases wherein a build of one or more upstream data products is initiated by an external trigger, the updating of these data products may be irregular, making it difficult or impossible to rely on a scheduled trigger for updating the downstream data product dependent thereon. User-defined update rules for the downstream data product are therefore particularly advantageous in cases such as these.

Also newly (and independently) illustrated in Fig. 8d, as an additional logical clause of update rule 834 is a data quality criterion 836. One or any number of data quality criteria may optionally feature in any user-specified update rule. Any update rule can in general comprise data quality criteria, either alone, or in a logical combination with one or more other data quality criteria and/or in a logical combination with one or more freshness criteria. "Data quality" as used herein refers to those aspects such as accuracy, completeness, consistency, validity, uniqueness and/or integrity of an upstream data product's data.

As shown in Fig. 8d, the downstream data product R can determine a desired level of accuracy for the data of one or more upstream data products' data (in this case, data product C), for instance by reference to each upstream data product's SLIs and/or SLOs. A downstream product can evaluate one or more SLIs and/or SLOs of one or more upstream data products and effectively make its own determination on whether the product is sufficiently accurate. In this way, the accuracy of the upstream data is evaluated and a decision is made on whether it is useable by the downstream data product, based on criteria set by that same downstream data product.

As an example, an upstream data product used in a nuclear power production facility responsible for providing power generation metrics may be accessed by two downstream data products. A first downstream data product responsible for calculating high-level long-term power generation insights for the facility's shareholders might consider data from the upstream data product to be acceptable if it passes at least a reasonable number of data quality checks and/or has at least reasonable data quality metrics (low error rates, uniqueness and non-null tests being passed, and so forth). On the other hand, a second downstream data product responsible for providing safety-critical data to control room staff might only consider data from the upstream data product acceptable if it passes a substantially higher number of data quality checks and/or has substantially higher data quality metrics.

The data used to evaluate whether data quality criteria are met (or not), including SLI or SLO data, may be obtained from the data product registry. This data may in some embodiments be obtained from the data product manifest of each relevant upstream data product in the data product registry.

### Other update rules

A downstream product can in general define update rules to be evaluated. The update rules may be user-specified, and it may be possible for said user to choose, select, define or specify these rules arbitrarily. Update rules may provide outcomes based on (i.e., may make use of) any suitable attributes of the upstream data products that a downstream data product depends upon, and/or any optional other factors that may be suitable. For example, the percentage completion of an upstream product's build may be used as a parameter by an update rule of the downstream data product.

In some embodiments, at least one user-defined update rule may comprise a formula in propositional logic, wherein determining whether the update condition is satisfied comprises evaluating the truth-value of the formula. For instance, consider a rule of the form "((data product A published within the last hour) OR (data product B published within the last hour)) AND (NOT (the most recent build of data product C failed))" - the rules engine can determine whether to perform an associated action (e.g., triggering a build pipeline) based on the freshness data for A/B/C according to the following truth-table:

| *P* (A < 1h?) | Q (B< 1h?) | *R* (C failure?) | *P* ∨ *Q* | ¬*R* | (*P* ∨ *Q*) ∧ (¬*R*) |
|---|---|---|---|---|---|
| false | false | false | false | true | false |
| false | false | true | false | false | false |
| false | true | false | true | true | true |
| false | true | true | true | false | false |
| true | false | false | true | true | true |
| true | false | true | true | false | false |
| true | true | false | true | true | true |
| true | true | true | true | false | false |

Thus, the update condition in such a case would be met if the times elapsed since publication of A and B are respectively 65m and 45m, and C has built successfully (P false, Q true, R false), but would not be met if the times elapsed since publication of A and B are respectively 55m and 56m, and C's last build failed (P true, Q true, R true).

Indeed, the user-defined rules may comprise rules that are built up from arbitrarily many atomic propositions and variables (such as P/Q/R above) combined together using logical conjunction, disjunction, and/or negation operators (i.e., AND, OR, NOT). There may be no maximum length on the number of propositions or operations in such a formula.

In some embodiments, at least one user-defined update rule may comprise a formula in first-order logic (or "predicate logic"), wherein determining whether the update condition is satisfied comprises evaluating the truth-value of the formula. For instance, a rule might be given of the form "*P* ∧ ((∀*x. Q*(*x*) → *R*(*x*)) ∨ *(∃x. Q(x) A S(x)))",* where
a. P is satisfied if and only if data product A published within the last hour;
b. Q(x) is satisfied if and only if x is an upstream data product on which data product B depends;
c. R(x) is satisfied if and only if x was last published over an hour ago; and
d. S(x) is satisfied if and only if x was last published over four hours ago.

In this case, the update condition would be satisfied whenever A is fresh (within the last hour) and either i) all of B's upstream dependencies are at least a little stale (1h+), or ii) at least one or B's upstream dependencies is very stale (4h+) (or both).

In some embodiments, at least one user-defined update rule may comprise a function, script or subroutine coded in a programming language by the user. In some embodiments, the programming language can be an imperative or procedural programming language. In some embodiments, the programming language can be a functional or declarative programming language. The programming language chosen for implementing user-defined update rules may advantageously be Turing-complete. The rules engine may be configured to run user-specified code (either by interpreting it directly or by compiling it into an executable and running said executable) to determine whether the update condition is satisfied. Means for evaluating the rules and determining whether the update condition is satisfied may in some embodiments include a Lambda function running either native Python code or interpreted Jinja code, for instance.

As just one example, the programming language Python may be used to define an update rule of the form e.g.,:

```
 def check_refresh_trigger():
    if (A.metadata['last_build_time'] > R.metadata ['last_refresh_time']) or \
        (B.metadata['last_build_time'] > R.metadata['last_refresh_time']):
        return True
    else:
        return False
```

In this case, the update rule is satisfied whenever one or both of data product A or data product B has been build more recently than data product R.

### Miscellaneous

A top-level workflow to create a composite data product may involve, for instance:
a. Configuring a data product definition (e.g., in a specification file);
b. Creating/configuring any required data transformation(s);
c. Creating/configuring any required testing infrastructure and/or tests;
d. Optionally creating update rules to handle dependencies - in some examples, the composite data product can be configured so that a build is rerun every time that the conditions set out in a ruleset are met (or every time a build of a data product completes (or successfully completes) and the conditions met);
e. Running the new composite data product's build pipeline for the first time - this can e.g., cause an entry to be created for the composite data product within the data product registry; and
f. Optionally, pushing metadata about the new composite data product to a data product catalogue for discovery by end users.

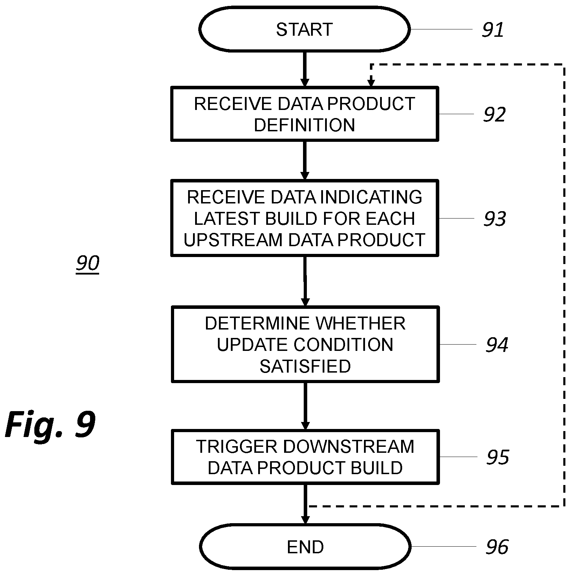

Referring now to Fig. 9, a computer-implemented method 90 for use in building a downstream data product is depicted, in accordance with an embodiment of the present invention. The method is initiated at 91.

In a step 92, a data product definition for the downstream data product is received. The data product definition identifies one or more upstream data products on which the downstream data product depends.

In a step 93, data indicating the latest build for each upstream data product is received.

In a step 94, a determination is made of whether an update condition is satisfied, based on the received data and one or more user-defined update rules for the downstream data product.

In a step 95, in accordance with a determination that the update condition is satisfied, a build of the downstream data product is triggered. The method ends at 96.

Optionally, rather than terminating immediately, the method may be repeated (as illustrated in Fig. 9 by the use of a dashed arrow) to build one or more even further downstream data products. For example, if the data product definition received in step 92 identified that a downstream data product R were dependent on upstream data products A and B, the method may be repeated, with a data product definition for a downstream data product T dependent on data product R and a further data product (S, say) being read in a second iteration of step 92; with data indicating the latest build for data product R (i.e., the build triggered in the first iteration of step 95) being read in a second iteration of step 93; with a determination of whether an update condition is satisfied based on the update rules for data product T in a second iteration of step 94, and so forth. The second iteration (or at least the second iteration of step 93) may optionally be triggered by the completion of the build of data product R that was triggered in (the first iteration of) step 95.

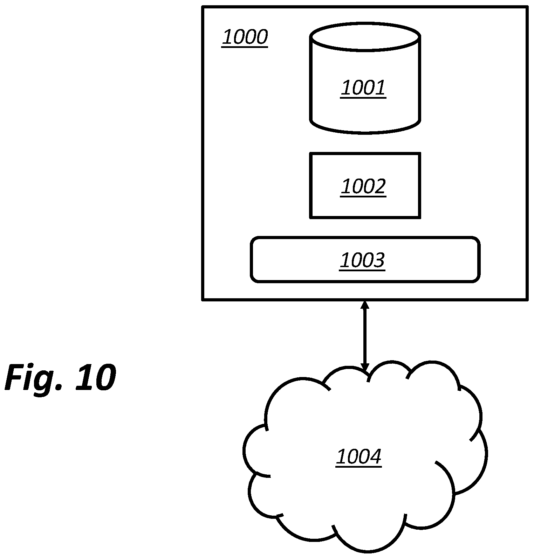

Referring now to Fig. 10, components of a computing device 1000 suitable for use in implementing any one or more of the methods described herein either in part or in their entirety. Computing device 1000 as depicted includes a memory 1001, processor 1002, and communication interface 1003. The processor 1002 is configured to obtain computer executable code from the memory 1001 and execute the computer executable code to perform the processes described herein. Any computing device as described herein may likewise also be configured with the same type of components in the same fashion as depicted in Fig. 10.

In some embodiments, computing device 1000 may additionally be configured with output components for user interaction, such as console outputs, menu-based systems, graphical user interfaces, displays, CRT or LCD screens, monitors, and the like. In some embodiments, computing device 1000 may additionally be configured with input components for user interaction, such as mice, keyboards, trackballs, joysticks, touchscreens, and the like.

Of course, it will be recognised that such user-facing features are by no means necessary for computing device 1000 to possess in order to realise the benefits associated with the present invention, and that the benefits of the present invention may be realised even with computing device 1000 lacking some or all of the aforementioned user-facing input and/or output components. Indeed, in embodiments having a high degree of automation, no user-facing components (or only minimal user-facing components) may be needed.

Any data described as being stored in one or more of the computing devices disclosed herein may be stored in hardware which is easily accessible by processor 1002, such as in memory 1001. The data may be held in ROM or RAM, or held in and retrieved from a solid state or hard disk drive, or stored externally and retrieved via a network such as network 1004 using communication interface 1003. Other technical means of storing data and retrieving it for use by processor 1002 will be evident to those of ordinary skill in the art.

It will be appreciated that the transmission of data among components of computing systems and/or data processing systems described herein may occur in a variety of specific ways, many of which are essentially functionally equivalent for the purposes of the present invention. For example, data may be transferred from one computing device to another computing device over a network such as network 84 via "push"-style proactive sending steps by the transferring device, or via "pull"-style steps carried out on the processor of the receiving device, such as repeated polling of the transferring device to determine whether new data is available and ready to be transferred. Networking may be implemented using a layered model such as the TCP/IP model in accordance with any suitable set of selected application, transport, internet and data link layer protocols as will be known to those skilled in the art.

The term "comprising" encompasses "including" as well as "consisting" e.g. a composition "comprising" X may consist exclusively of X or may include something additional e.g. X + Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP (Digital Signal Processor), programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications are possible within the scope of the appended claims and may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A computer-implemented method for use in building a downstream data product, the method comprising:
receiving a data product definition for the downstream data product, wherein the data product definition identifies one or more upstream data products on which the downstream data product depends;
receiving data indicating the latest build for each upstream data product;
determining, based on the received data and one or more user-defined update rules for the downstream data product, whether an update condition is satisfied; and
in accordance with a determination that the update condition is satisfied, triggering a build of the downstream data product.

2. The method of claim 1, wherein the data indicating the latest build for each upstream data product is published to a registry, and wherein receiving said data comprises reading it from said registry.

3. The method of claim 2, further comprising the steps of:
triggering a build of an upstream data product on which the downstream data product depends; and
upon completion of the build of the upstream data product, publishing data indicating said build to the registry.

4. The method of any preceding claim, wherein the one or more user-defined update rules are published to a registry and wherein determining whether the update condition is satisfied comprises reading said update rules from the registry.

5. The method of any preceding claim, wherein the step of determining whether the update condition is satisfied is triggered by either:
build completion of an upstream data product on which the downstream data product depends; or
a time-based trigger; or
an external trigger.

6. The method of any preceding claim, further comprising, upon completion of the build of the downstream data product, publishing data about said build to a registry.

7. The method of any preceding claim, wherein the downstream data product is a composite data product dependent on a plurality of upstream data products.

8. The method of any preceding claim, wherein the one or more user-defined update rules comprise an update rule whose satisfaction is determined based on both:
the time at which the latest build of an upstream data product finished; and
the time at which the latest build of the downstream data product finished.

9. The method of claim 8, wherein said update rule satisfies the update condition if and only if the latest build of the upstream data product finished more recently than the latest build of the downstream data product.

10. The method of any preceding claim, wherein at least one user-defined update rule comprises either:
a formula in propositional or first-order logic, wherein determining whether the update condition is satisfied comprises evaluating the truth-value of the formula; or
a function, script, or subroutine coded in a programming language by the user.

11. The method of any preceding claim, wherein at least one user-defined update rule comprises a logical combination of one or more freshness criteria and/or one or more data quality criteria.

12. The method of claim 11, wherein each freshness criterion specifies a property of, or relationship between, one or more of:
the time at which the latest build of each of one or more upstream data products finished;
the time at which the latest build of each of one or more downstream data products finished; and
the current time.

13. The method of any preceding claim, wherein the one or more user-defined update rules comprise any one or more of:
a rule satisfying the update condition if and only if a scheduled build of each of the upstream data products has finished;
a rule satisfying the update condition if and only if a scheduled build of each of the upstream data products has finished successfully;
a rule satisfying the update condition if and only if the latest build of each of the upstream data products satisfies a respective user-specified freshness criterion; or
a rule satisfying the update condition if and only if the latest build of each of the upstream data products satisfy a respective user-specified data quality criterion.

14. A device comprising a processor and a memory, the memory comprising instructions which, when executed by the processor, cause the processor to perform the method of any one of claims 1 to 13.

15. A non-transitory computer-readable storage medium comprising instructions which, when executed on a computer, cause the computer to perform the method of any one of claims 1 to 13.
